# EUROPÄISCHE PATENTSCHRIFT

(11) **EP 0 900 682 B1**
(45) Veröffentlichungstag und Bekanntmachung des Hinweises auf die Patenterteilung: **17.04.2002**
(21) Anmeldenummer: 98115481.8
(22) Anmeldetag: 18.08.1998
(51) Int. Cl.: B60K 1/04, B62D 21/15

(54) **Batterieträger für eine Traktionsbatterie eines Elektrofahrzeugs**
Container for the traction battery of an electric vehicle
Réceptacle pour la batterie de traction d'un véhicule électrique

(30) Priorität: 04.09.1997 DE 19738620
(43) Veröffentlichungstag der Anmeldung: 10.03.1999
(73) Patentinhaber: DaimlerChrysler AG, 70567 Stuttgart (DE)
(72) Erfinder: Botzelmann, Herbert, 73630 Remshalden (DE); Brämig, Falk-Hagen, 71083 Herrenberg (DE); Eipper, Konrad, 72119 Ammerbuch (DE); Gere, Peter, 73277 Owen (DE); Weiss, Oskar, 75382 Althengstett (DE)

(56) Entgegenhaltungen:
- EP-B- 0 559 176
- DE-A- 19 504 031
- DE-A- 19 627 061
- US-A- 5 351 791
- PATENT ABSTRACTS OF JAPAN vol. 96, no. 4, 30. April 1996 -& JP 07 323737 A (NISSAN), 12. Dezember 1995

## Beschreibung

Die Erfindung betrifft einen Batterieträger für eine Traktionsbatterie eines Elektrofahrzeugs gemäß den Merkmalen des Oberbegriffs des Patentanspruchs 1.

Elektrofahrzeugen müssen zur Erreichung ausreichender Reichweiten große Traktionsbatterien mitführen. Bei Batteriemassen von mehreren hundert Kilogramm kommt der Batteriebefestigung große Bedeutung zu. Ausgehend von einem konventionellen Fahrzeug mit Verbrennungsmotor führt das Mehrgewicht aufgrund der hohen Batteriemasse bei vergleichbarer Rohbaustruktur zu einer nachteiligen Beeinflussung der Crashsicherheit, wenn nicht besondere Maßnahmen getroffen werden. Bei gleichem Formänderungswiderstand des Fahrzeugvorbaus wie bei der Verbrennungsmotorvariante würde die Zusatzmasse - insbesondere in der für die Sensorik wichtigen Anfangsphase (0 - ca. 30 ms) des Crashablaufes - zu einem Abfall der Verzögerungskennlinie führen, d.h. das Fahrzeug würde bei einem Aufprall langsamer abgebremst. Hierdurch würde sich aber der Auslösezeitpunkt der Gurtstraffer und Airbags zeitlich nach hinten verschieben, so daß sich die Insassenrückhaltung verschlechtert.

Um dieses Problem zu lösen ist es z.B. Beispiel aus der gattungsbildenden EP 0 559 176 B1 bekannt, die Batterie im Fahrzeug verschiebbar zu lagern. Durch die beim Frontalaufprall auftretenden Verzögerungen kann sich der Batterieträger in Richtung der Fahrzeuglängsachse verschieben, wobei gleichzeitig durch Energieaufnahmemittel in kontrollierter Weise kinetische Energie des Batterietroges unter teilweisem Energieverzehr auf die Fahrzeugkarosserie übertragen wird. In der gattungsbildenden Schrift ist eine Freilaufstrecke vorgesehen, so daß der Batterieträger nach einem Aufprall für eine vorbestimmte Wegstrecke im wesentlichen frei zur Fahrzeugkarosserie läuft. Dadurch wird zu Beginn des Crashvorgangs für kurze Zeit die Batteriemasse vom Fahrzeug entkoppelt, so daß in diesem Zeitintervall die Batteriemasse keinen Einfluß auf die Verzögerungskennlinie hat. Es Bedarf daher keiner zusätzlichen Anpassungsmaßnahmen für das Elektrofahrzeug hinsichtlich Vorbaustruktur oder Auslöseverhalten, um eine gleiche Insassenrückhaltung wie bei der verbrennungsmotorischen Variante zu erreichen, da die Auslöseentscheidung innerhalb des durch die Freilaufstrecke gegebenen Freilauf-Zeitintervalls getroffen wird.

In der gattungsbildenden Schrift wird die Freilaufstrecke durch als Langlöcher ausgeführte Führungsmittel gebildet, in welchen Befestigungsschrauben zur Befestigung des Batterieträgers an der Fahrzeugkarosserie geführt sind, womit der Batterietrog längsverschiebbar gelagert ist. Als Energieaufnahmemittel sind zur Abbremsung der Verschiebung sind durch enge Ösen laufende Flachbandstähle vorgesehen, deren Breite so ausgebildet ist, daß die Flachbandstähle erst nach Durchlaufen der Freilaufwegstrecke zwecks Energieverzehr verformt werden.

Aufgabe der Erfindung ist es, eine Alternative zu dem gattungsbilden Batterieträger bereitzustellen.

Diese Aufgabe wird durch die Merkmale des Patentanspruchs 1 gelöst, wobei die Merkmale der Unteransprüche vorteilhafte Ausund Weiterbildungen kennzeichnen.

Erfindungsgemäß besteht das Führungsmittel aus mindestens einem Gleitrohr, welches sich in Längsrichtung zur Fahrzeugkarosserie erstreckt, wobei die Halterungen zur Befestigung des Batterietroges an der Fahrzeugkarosserie das Gleitrohr umgreifen, so daß der Batterietrog gehalten wird und im Falle einer freigegebenen Bewegung des Batterietroges das Gleitrohr relativ zu den Halterungen für eine begrenzte Wegstrecke in axiale richtung verschiebbar ist.

Prinzipiell kann das Gleitrohr fahrzeugfest und der Batterietrog mittels der Halterungen an diesem verschiebbar gelagert sein, oder es kann umgekehrt das Gleitrohr am Batterietrog befestigt sein, wobei die dem Gleitrohr zugehörigen Halterungen an der Fahrzeugkarosserie zu befestigen sind. Mischtypen sind auf denkbar.

Eine bevorzugtes Ausführungsbeispiel besteht in der Anordnung von Gleitrohren beidseitig des Batterietroges. Damit können die Gleitrohre als Haltgriffe beim Transport des Batterieträgers verwendet werden.

Weitere Einzelheiten und vorteilhafte Weiterbildungen des erfindungsgemäßen Batterieträgers ergeben sich aus weiteren Unteransprüchen in Verbindung mit der folgenden Beschreibung.

Ein Ausführungsbeispiel der Erfindung ist in der Zeichnung dargestellt und wird nachstehend erläutert. Es zeigen:
- Fig. 1: den erfindungsgemäßen Batterieträger mit einer ersten Ausführungsform des Energieaufnahmemittels,
- Fig. 2: eine zweite Ausführungsform des Energieaufnahmemittels,
- Fig. 3: eine dritte Ausführungsform des Energieaufnahmemittels.

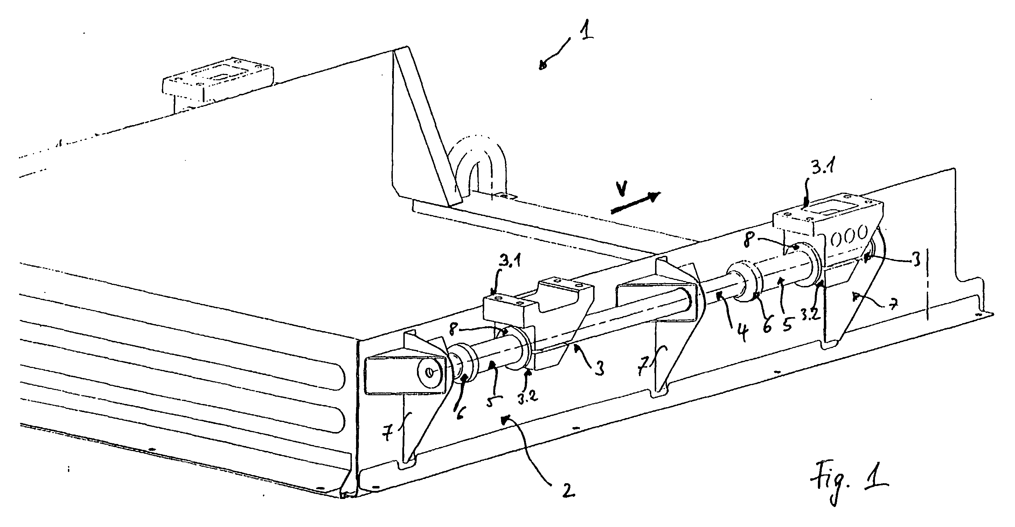

Das bevorzugte Ausführungsbeispiel in Fig. 1 zeigt den erfindungsgemäßen Batterieträger 1 für eine Traktionsbatterie eines Elektrofahrzeugs. In der gezeigten Seitenansicht des Batterieträgers 1 ist nur die eine Längsseite sichtbar, die andere Längsseite ist entsprechend ausgebildet.

Der Batterieträger 1 umfaßt einen Batterietrog 2 zur Aufnahme der Traktionsbatterie (nicht dargestellt). Zur Befestigung des Batterieträgers 1 an der Fahrzeugkarosserie dienen die Halterungen 3, welche ein mit dem Batterietrog 2 verbundenes, sich in Fahrzeuglängsrichtung erstreckendes Gleitrohr 4 umgreifen, so daß der Batterietrog 2 gehalten wird. Das Gleitrohr 4 ist an dem Batterietrog 2 mittels Haltestegen 7 unverrückbar befestigt.

Die Fahrzeuglängsrichtung entspricht in Fig. 1 dem Pfeil, welcher die Vorwärtsgeschwindigkeit v kennzeichnet. Im Falle eines Aufpralls erfährt der Batterietrog 2 eine der Batteriemasse proportionale Beschleunigungskraft in der dargestellten Pfeilrichtung. Da das Gleitrohr 4 relativ zu den Halterungen 3 für eine begrenzte Wegstrecke in axiale Richtung verschiebbar ist, indem es durch die Halterungen 3 gleitet, kann der Batterietrog 2 durch die Beschleunigungskraft in Pfeilrichtung relativ zur Fahrzeugkarosserie beschleunigt werden. Das Gleitrohr 4 dient gleichzeitig als Führungsmittel, um bei einem Aufprall eine Bewegung des Batterietroges 2 auf die Längsrichtung des Fahrzeugs zu beschränken.

Die Halterungen 3 sind gleichzeitig als Bewegungsbeschränkungsmittel ausgebildet, indem sie mit einer oberen Klemmbacke 3.1 und einer unteren Klemmbacke 3.1 das Gleitrohr haltend umgreifen und in axiale Richtung reibschlüssig festklemmen. Der mit Befestigungsschrauben zwischen den Klemmbacken 3.1, 3.2 einstellbare Anklemmdruck auf das Gleitrohr beschränkt die Bewegung des Batterietroges 2 relativ zu der Fahrzeugkarosserie, so daß nur bei einem Aufprall ab einer bestimmten Aufprallstärke, welche den Reibschluß überwindet, eine axiale Verschiebung des Gleitrohres 4 relativ zu den Halterungen 3 zugelassen und damit eine Bewegung des Batterietroges 2 relativ zur Fahrzeugkarosserie freigegeben wird. Des weiteren ist es denkbar, Scherstifte anstelle oder ergänzend zu den Klemmbacken 3.1, 3.2 als Bewegungsbeschränkungsmittel vorzusehen.

Der Batterieträger 1 umfaßt außerdem Energieaufnahmemittel zur kontrollierten Übertragung von kinetischer Energie von dem Batterietrog 2 auf die Fahrzeugkarosserie unter zumindest teilweisem Energieverzehr. Die Energieaufnahmemittel werden in dem Ausführungsbeispiel durch mindestens ein auf das Gleitrohr 4 geschobenes Deformationsrohr 5 gebildet. Als Deformationsrohr 5 sind alle Rohre geeignet, welche unter Druckspannung in Längsrichtung unter Energieverzehr verkürzbar sind. Das Deformationsrohr 5 ist so angeordnet, daß im Verlauf der freigegebenen Bewegung des Batterietroges 2 entlang der begrenzten Wegstrecke das Deformationsrohr 5 zwischen einer Halterung 3 und einer an dem Gleitrohr 4 unverrückbar befestigten Klemmscheibe 6 eingespannt wird, worauf die Verkürzung des Deformationsrohres 5 einsetzt. Vorzugsweise ist das Deformationsrohr 5 durch Kleben, Klemmen oder anderen Formschluß fest mit der Klemmscheibe 6 verbunden, wodurch ein unkontrolliertes Klappern des Deformationsrohren 5 verhindert wird. Beispielsweise kann die Klemmscheibe 6 als Buchse zur Aufnahme des einen Endes des Deformationsrohres 5 ausgebildet sein. Vorzugsweise ist an der Halterung 3 ein Anlaufring 8 vorgesehen, welcher einen Anschlag definierter Fläche für das andere Ende des Deformationsrohres 4 bildet.

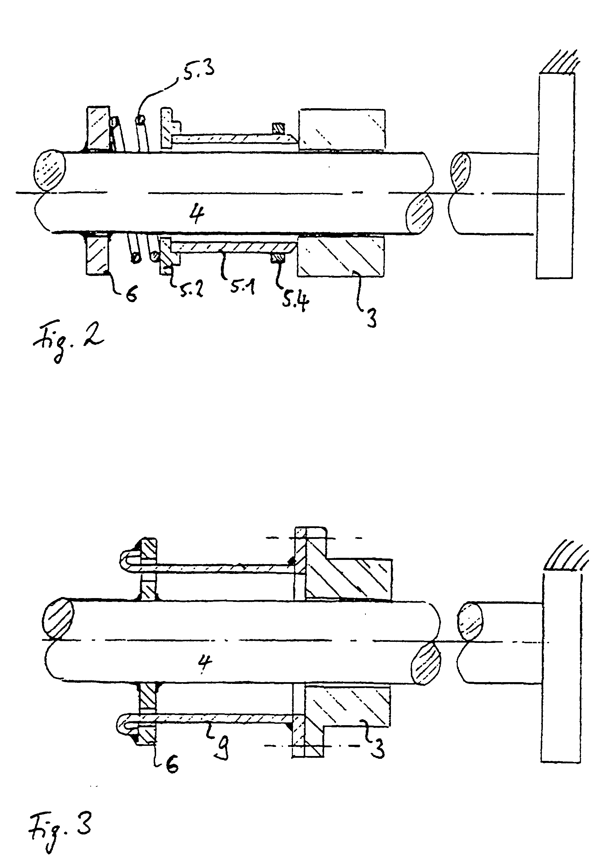

Die Deformationsrohre 5 können beispielsweise durch Faserverbund-Werkstoff-(FVW)-Rohre gebildet werden, welche unter hoher Druckspannung zerstört werden, sich dabei definiert verkürzen, ohne aufzuplatzen. FVW-Rohre können z.B. im Wickelverfahren oder Extrusionsverfahren hergestellt werden. Der Matrixwerkstoff kann z.B. thermoplastisch oder duroplastisch sein. Als Fasern können z.B. verwendet werden: Glas, Aramid, Kohle, Naturstoffe oder Kunststoffasern. Es können auch geeignete metallische Rohre als Deformationsrohre 5 eingesetzt werden, welche durch Beulung Verformungsenergie aufnehmen. Das Deformationsrohr 5 kann auch als Stülprohr (Fig. 2) ausgebildet sein, bei dem Energie nicht durch Zerstörung oder Beulung sondern durch Aufweiten und Umstülpen vernichtet wird.

Um Zugang zur im Batterietrog 2 gelagerten Traktionsbatterie zu erhalten, kann der gesamte Batterieträger 1 durch Lösen der Klemmbacken 3.1, 3.2 von der Fahrzeugkarosserie getrennt werden. Damit ist in vorteilhafter Weise ein einfacher Zugang möglich. Um die Deformationsrohre 5 auszuwechseln, kann das Gleitrohr 4 gelöst und durch die Haltestege 7 und Halterungen 3 herausgezogen werden, womit die Deformationsrohre 5 entfernt und ersetzt werden können.

In Fig. 1 ist das Energieaufnahmemittel mit den Deformationsrohren 5 so ausgebildet, daß sofort mit einsetzender Bewegung des Batterietroges 2 eine energieverzehrende Wirkung einsetzt. Dabei kann die Progression des Energieverzehrs durch die Ausbildung des Deformationsrohres 5 beeinflußt werden. Bei einem FVW-Rohr kann beispielsweise durch die Wicklungsdichte der Verkürzungswiderstand so ausgebildet werden, daß der Energieverzehr zunächst langsam und dann stark ansteigt.

Alternativ können die Deformationsrohre 5 kürzer als die theoretisch vorhandene Strecke zwischen Klemmscheibe 6 und Halterung 3 ausgebildet sein, womit eine Freilaufstrecke gebildet wird. Sind entlang eines Gleitrohres mehrere Deformationsrohre vorgesehen, in Fig. 1 sind es zwei Stück, kann durch eine unterschiedliche Auswahl der Längen der Deformationsrohre und damit der Freilaufstrecken ein mit der Verkürzung stufenweise ansteigender Energieverzehr gebildet werden.

Die Fig. 2 zeigt einen Ausschnitt aus dem Gleitrohr 4 mit einer zweite Ausführungsform für das Energieaufnahmemittel, welches zwischen der mit der Fahrzeugkarosserie verbundenen Halterung 3 und der mit dem Gleitrohr 4 verschweißten Klemmscheibe 6 eingespannt ist. Das Energieaufmittel umfaßt ein Deformationsrohr 5.1, welches sich an seinem einen Ende mittels einer Haltescheibe 5.2 über ein Federelement 5.3 gegen die Klemmscheibe 6 abstützt. Das Federelement 5.3 kann als Schraubenfeder, elastische Zwischenlage oder Federscheibe ausgebildet sein. Es dient zum Einen dazu, daß das Deformationsrohr 5.1 im Fahrbetrieb nicht klappert. Zum Anderen kann es bei entsprechender Auslegung dazu dienen, auf dem kurzen Verschiebungsweg zwischen Klemmscheibe 6 und Halteschescheibe 5.2 einen reversiblen, zerstörungsfreien Energieverzehr bereitzustellen, bevor der Energieverzehr durch das Energieaufnahmemittel 5.1 einsetzt.

Damit das Deformationsrohr 5.1 bei einsetzender, aufprallbedingter Deformation nicht aufbricht und dann keine Energie mehr abbaut, kann es je nach Werkstoff und Herstellung des Rohres, insbesondere bei im Extrodierverfahren hergestellten FVW-Rohren, erforderlich sein, einen Schiebering 5.4 im Derformationsbereich des Deformationsrohres 5.1 vorzusehen. Dieser Schiebering 5.4 wird bei fortschreitender Zerstörung des Deformationsrohres 5.1 verschoben und gewährleistet eine gleichmäßige Zerstörung des Rohres.

Die Fig. 3 zeigt die Ausführung des Energieaufnahmemittels mit einem Stülprohr 9 aus metallenem Werkstoff. Das Stülprohr 9 ist mit der Klemmscheibe 6 auf der dem Stülprohr abgewandten Seiten verschweißt ( wie in Fig. 2) oder über Platten verschraubt, um eine gleichmäßige Aufweitung und Umstülpung sicherzustellen.

Der erfindungsgemäße Batterieträger wurde hinsichtlich des Abfangens eines Frontalaufpralls konzipiert. Analog können Energieaufnahmemittel und Klemmscheiben so angeordnet werden, daß ein Heckaufprall aufgefangen wird. Eine Kombination ist ebenfalls denkbar.

Die Gleitrohre müssen nicht notwendig horizontal längs der Fahrzeugachse verlaufen, sondern können stattdessen geneigt verlaufen, wodurch einer freigegebene Bewegung des Batterietroges mehr Verschiebeweg zur Verfügung gestellt werden kann. Sofern ausreichend Bauraum zur Verfügung steht, kann die Neigung so gewählt werden, daß bei einer aufprallbedingten Verschiebung der Batterietrog angehoben wird, wodurch zusätzlich Energie aufgenommen würde.

## Patentansprüche

1. Batterieträger (1) für eine Traktionsbatterie eines Elektrofahrzeugs umfassend
- einen Batterietrog (2) zur Aufnahme der Traktionsbatterie,
- Halterungen (3) zur Befestigung des Batterietroges (2) an der Fahrzeugkarosserie,
- Bewegungsbeschränkungsmittel, welche eine Bewegung des Batterietroges (2) relativ zu der Fahrzeugkarosserie beschränken und nur bei einem Aufprall ab einer bestimmten Aufprallstärke den Batterietrog (2) zu einer Bewegung relativ zur Fahrzeugkarosserie freigeben,
- Führungsmittel, welche ermöglichen, daß eine freigegebene Bewegung des Batterietroges (2) bei einem Aufprall auf eine Längsrichtung des Fahrzeugs beschränkt wird,
- Energieaufnahmemittel zur kontrollierten Übertragung von kinetischer Energie von dem Batterietrog (2) auf die Fahrzeugkarosserie unter zumindest teilweisem Energieverzehr,
**dadurch gekennzeichnet,**
**daß** das Führungsmittel aus mindestens einem Gleitrohr (4) besteht, welches sich in Längsrichtung zur Fahrzeugkarosserie erstreckt, wobei die Halterungen (3) zur Befestigung des Batterietroges (2) an der Fahrzeugkarosserie das Gleitrohr (4) umgreifen, so daß der Batterietrog (2) gehalten wird und im Falle einer freigegebenen Bewegung des Batterietroges (2) das Gleitrohr (4) relativ zu den Halterungen (3) für eine begrenzte Wegstrecke in axiale Richtung verschiebbar ist.

2. Batterieträger nach Anspruch 1,
**dadurch gekennzeichnet,**
**daß** die Energieaufnahmemittel mindestens ein auf das Gleitrohr (4) geschobenes Deformationsrohr (5; 5.1; 9) umfassen, welches unter Druckspannung in Längsrichtung unter Energieverzehr verkürzbar ist, wobei das Deformationsrohr (5; 5.1; 9) so angeordnet ist, daß im Verlauf der freigegebenen Bewegung des Baterietroges (2) entlang der begrenzten Wegstrecke das Deformationsrohr (5; 5.1; 9) zwischen einer Halterung (3) und einer an dem Gleitrohr (4) befestigten Klemmscheibe (6) eingespannt wird, worauf die Verkürzung des Deformationsrohres (5; 5.1; 9) einsetzt.

3. Batterieträger nach Anspruch 2,
**dadurch gekennzeichnet,**
**daß** mindestens eine Gleitrohr (4) an dem Batterietrog (2) mittels Haltestegen (7) unverrückbar befestigt ist und die dem Gleitrohr (4) zugehörigen Halterungen (3) an der Fahrzeugkarosserie zu befestigen sind.

4. Batterieträger nach Anspruch 3,
**dadurch gekennzeichnet,**
**daß** die Halterungen (3) jeweils eine obere (3.1) und eine untere Klemmbacke (3.2) aufweisen, welche das Gleitrohr (4) haltend umgreifen und zugleich das Bewegungsbeschränkungsmittel bilden, indem sie das Gleitrohr (4) in axiale Richtung reibschlüssig festklemmen und erst oberhalb einer bestimmten Aufprallstärke eine Verschiebung des Gleitrohres (4) relativ zu den Halterungen (3) zulassen.

5. Batterieträger nach Anspruch 2,
**dadurch gekennzeichnet,**
**daß** das Deformationsrohr (5) so ausgebildet und bemessen ist,
**daß** sofort mit einsetzender Bewegung des Batterietroges (2) eine energieverzehrende Wirkung einsetzt.

6. Batterieträger nach Anspruch 5,
**dadurch gekennzeichnet,**
**daß** das Deformationsrohr (5) so ausgebildet ist, daß mit zunehmender Verkürzung der Energieverzehr zunächst langsam und dann stark ansteigt.

7. Batterieträger nach Anspruch 5 oder 6,
**dadurch gekennzeichnet,**
**daß** das Deformationsrohr (5) aus Faserverbund-Werkstoff gebildet ist.

8. Batterieträger nach Anspruch 5 oder 6,
**dadurch gekennzeichnet,**
**daß** das Deformationsrohr (9) als Stülprohr ausgebildet ist.

9. Batterieträger nach Anspruch 2,
**dadurch gekennzeichnet,**
**daß** mindestens ein Deformationsrohr (5) kürzer als die theoretisch vorhandene Strecke zwischen Klemmscheibe (6) und Halterung (3) ausgebildet ist.

10. Batterieträger nach Anspruch 2,
**dadurch gekennzeichnet,**
**daß** das Deformationsrohr (5.1) sich an seinem einen Ende mittels einer Haltescheibe (5.2) über ein Federelement (5.3) gegen die Klemmscheibe (6) abstützt.

## Claims

1. Battery carrier (1) for a traction battery of an electric vehicle, comprising
- a battery tray (2) for receiving the traction battery,
- retaining means (3) for anchoring the battery tray (2) to the vehicle body,
- movement-restricting means, which restrict displacement of the battery tray (2) relative to the vehicle body and do not permit a displacement of the battery tray (2) relative to the vehicle body except in the event of a collision and over and above a specific impact force,
- guide means, which restrict a permitted displacement of the battery tray (2) in a longitudinal direction of the vehicle in the event of an impact,
- energy-absorbing means producing a controlled transfer of kinetic energy from the battery tray (2) to the vehicle body whilst absorbing at least some of the energy,
**characterised in that**
the guide means consists of at least one slide tube (4) extending in the longitudinal direction of the vehicle body, the retaining means (3) for anchoring the battery tray (2) to the vehicle body enclosing the slide tube (4) so that the battery tray (2) is retained and, once displacement of the battery tray (2) is permitted, the slide tube (4) can be displaced relative to the retaining means (3) for a limited distance in an axial direction.

2. Battery carrier as claimed in claim 1,
**characterised in that**
the energy-absorbing means comprise at least one deformation tube (5; 5.1; 9) pushed onto the slide tube (4), which can be shortened when subjected to compression force in the longitudinal direction whilst absorbing energy, the deformation tube (5; 5.1; 9) being disposed so that during the course of the permitted displacement of the battery tray (2) along the limited travel distance, the deformation tube (5; 5.1; 9) is clamped between a retaining means (3) and a clamping ring (6) fixed to the slide tube (4), initiating a shortening of the deformation tube (5; 5.1; 9).

3. Battery carrier as claimed in claim 2,
**characterised in that**
at least one slide tube (4) is fixed to the battery tray (2) by means of retaining webs (7) so that it can not be dislodged and the retaining means (3) belonging to the slide tube (4) are fixed to the vehicle body.

4. Battery carrier as claimed in claim 3,
**characterised in that**
the retaining means (3) respectively have a top (3.1) and a bottom clamping jaw (3.2), which retainingly engage around the slide tube (4) and simultaneously act as movement-restricting means by dint of the fact that they clamp the slide tube (4) firmly in a friction fit in the axial direction and do not permit a displacement of the slide tube (4) relative to the retaining means other than over and above a specific impact force.

5. Battery carrier as claimed in claim 2,
**characterised in that**
the deformation tube (5) is designed and dimensioned such that an energy-consuming action is initiated immediately the battery tray (2) starts to move.

6. Battery carrier as claimed in claim 5,
**characterised in that**
the deformation tube (5) is designed so that increased shortening is accompanied by an initially slow and then increasingly rapid absorption of energy.

7. Battery carrier as claimed in claim 5 or 6,
**characterised in that**
the deformation tube (5) is made from a composite fibre material.

8. Battery carrier as claimed in claim 5 or 6,
**characterised in that**
the deformation tube (9) is designed as a clenched tube.

9. Battery carrier as claimed in claim 2,
**characterised in that**
at least one deformation tube (5) is shorter than the theoretical distance available between clamping ring (6) and retaining means (3).

10. Battery carrier as claimed in claim 2,
**characterised in that**
the deformation tube (5.1) is supported against a clamping ring (6) by means of a retaining ring (5.2) via a spring element (5.3) at its one end.

## Revendications

1. Réceptacle de batterie (1) pour une batterie de traction d'un véhicule électrique, comportant :
• un bac à batterie (2) pour recevoir la batterie de traction,
• des supports (3) pour fixer le bac à batterie (2) à la carrosserie du véhicule,
• des moyens de limitation du mouvement qui limitent un mouvement du bac à batterie (2) par rapport à la carrosserie du véhicule et ne libèrent le bac à batterie (2), pour effectuer un mouvement par rapport à la carrosserie du véhicule, qu'en cas de choc supérieur à une intensité déterminée,
• des moyens de guidage qui permettent qu'en cas de choc, un mouvement libre du bac à batterie (2) soit limité à une direction longitudinale du véhicule,
• des moyens de reprise de l'énergie pour un transfert commandé de l'énergie cinétique, depuis le bac à batterie (2), sur la carrosserie du véhicule, avec absorption au moins partielle de l'énergie,
**caractérisé par le fait que** le moyen de guidage est constitué d'au moins un tube coulissant (4) qui s'étend selon la direction longitudinale de la carrosserie du véhicule, les supports (3) prévus pour la fixation du bac à batterie (2) sur la carrosserie du véhicule enserrant le tube coulissant (4) de façon que le bac à batterie (2) soit maintenu et qu'en cas de mouvement libre du bac à batterie (2), le tube coulissant (4) puisse coulisser pour un parcours limité, selon la direction axiale, par rapport aux supports (3).

2. Réceptacle de batterie selon la revendication 1, **caractérisé par le fait que** les moyens de reprise de l'énergie comportent au moins un tube déformable (5 ; 5,1 ; 9) qui est enfilé sur le tube coulissant (4)et qui, sous contrainte de compression, peut se raccourcir selon la direction longitudinale en absorbant de l'énergie, le tube déformable (5 ; 5,1 ; 9) étant disposé de façon qu'au cours du mouvement libre du bac à batterie (2) le long du parcours limité, le tube déformable (5 ; 5,1 ; 9) soit bridé entre un support (3) et une bague de serrage (6) fixée sur le tube coulissant (4), sur quoi le raccourcissement du tube déformable (5 ; 5,1 ; 9) se produit.

3. Réceptacle de batterie selon la revendication 2, **caractérisé par le fait qu'**au moins un tube coulissant (4) est fixé, sans liberté de déplacement, au bac à batterie (2) au moyen de goussets de maintien (7) et que les supports (3) associés au tube coulissant (4) sont à fixer à la carrosserie du véhicule .

4. Réceptacle de batterie selon la revendication 3, **caractérisé par le fait que** les supports (3) présentent chacun un mors supérieur (3.1) et un mors inférieur (3.2) qui enserrent le tube coulissant (4) en le maintenant et forment en même temps le moyen de limitation du mouvement, en ce sens que, par frottement, ils brident le tube coulissant (4) selon la direction axiale et n'autorise un coulissement du tube coulissant (4) par rapport aux supports (3) qu'au-dessus d'une force de choc déterminée.

5. Réceptacle de batterie selon la revendication 2, **caractérisé par le fait que** le tube déformable (5) est conçu et dimensionné de façon que si un mouvement du bac à batterie (2) se déclenche, une action d'absorption de l'énergie se déclenche aussitôt.

6. Réceptacle de batterie selon la revendication 5, **caractérisé par le fait que** le tube déformable (5) est conçu de façon que l'absorption d'énergie croisse tout d'abord lentement puis fortement au fur et à mesure du raccourcissement.

7. Réceptacle de batterie selon la revendication 5 ou 6, **caractérisé par le fait que** le tube déformable (6) est formé d'un matériau composite de fibres.

8. Réceptacle de batterie selon la revendication 5 ou 6, **caractérisé par le fait que** le tube déformable (9) est conçu sous forme d'un tube à retrousser.

9. Réceptacle de batterie selon la revendication 2, **caractérisé par le fait qu'**au moins un tube déformable (5) est conçu plus court que le parcours existant théoriquement entre bague de serrage (6) et supports (3).

10. Réceptacle de batterie selon la revendication 2, **caractérisé par le fait qu'**à sa première extrémité le tube déformable (5.1) s'appuie, au moyen d'une bague d'arrêt (5.2) et par l'intermédiaire d'un élément élastique (5.3), contre la bague de serrage (6).
